# EUROPEAN PATENT SPECIFICATION

(11) **EP 3 872 409 B1**
(45) Date of publication and mention of the grant of the patent: **24.09.2025**
(21) Application number: 20818069.5
(22) Date of filing: 15.05.2020
(51) Int. Cl.: F24F 11/42, F24F 11/64, F24F 110/12

(54) **METHOD AND APPARATUS FOR IMPLEMENTING DEFROSTING, AND AIR CONDITIONER OUTDOOR UNIT**
VERFAHREN UND VORRICHTUNG ZUR DURCHFÜHRUNG VON ABTAUEN UND KLIMAANLAGENAUSSENEINHEIT
PROCÉDÉ ET APPAREIL POUR METTRE EN ?UVRE UN DÉGIVRAGE ET UNITÉ EXTÉRIEURE DE CLIMATISEUR

(30) Priority: 06.06.2019 CN 201910492243
(43) Date of publication of application: 01.09.2021
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: WANG, Feng, Qingdao, Shandong 266101 (CN)
(74) Representative: dompatent von Kreisler Selting Werner - Partnerschaft von Patent- und Rechtsanwälten mbB
(86) International application number: PCT/CN2020/090448
(87) International publication number: WO 2020/244366

(56) References cited:
- CN-A- 104 061 650
- CN-A- 106 288 144
- CN-A- 107 270 479
- CN-A- 107 461 962
- CN-A- 108 426 345
- CN-A- 109 269 019
- CN-A- 109 323 373
- CN-A- 109 612 027
- CN-A- 110 360 708
- JP-A- H03 221 766
- JP-A- S6 044 748
- KR-A- 20030 023 046

## Description

### TECHNICAL FIELD

The present invention relates to the technical field of air conditioners, and more particularly, to a method and an apparatus for defrosting, and an outdoor unit of an air conditioner.

### BACKGROUND

In the prior art, a defrosting mode of an air conditioner, mostly depending on how long the air conditioner has operated and detection of an ambient temperature, is started under the conditions that the air conditioner has operated for more than a preset duration and the ambient temperature is lower than a preset temperature.

In implementing embodiments of the present disclosure, it has been found that the prior art is defective at least in that:
it's not an effective way to determine whether the air conditioner is frosted and shall start a defrosting mode depending on how long the air conditioner has operated and the ambient temperature, as a result, the defrosting mode may often start while the air conditioner is actually not frosted. CN 106 288 144 A discloses an air conditioner and method according to the preamble of claims 1 and 3.

### SUMMARY

A summary is provided to facilitate a basic understanding of some aspects of the disclosed embodiments. The summary is not a general overview, nor is it intended to identify key/critical elements or to define the scope of the embodiments, but rather as a prelude to the detailed description that follows.

Embodiments of the present disclosure provide a method and an apparatus for defrosting and an outdoor unit of an air conditioner to solve the problem of failing to effectively determine whether the air conditioner is frosted and starting a defrosting mode while the air conditioner is actually not frosted.

In some embodiments, the method for defrosting includes:
acquiring an ambient temperature and a rotation speed of an outdoor unit of an air conditioner;
determining whether the ambient temperature and the rotation speed of the outdoor unit meet a defrosting condition; and
starting a defrosting operation of the air conditioner if the defrosting condition is met;
where the defrosting condition stipulates that the ambient temperature is lower than a temperature threshold and the rotation speed of the outdoor unit is lower than a rotation speed threshold value.

In some embodiments, the apparatus for defrosting includes:
an acquisition module configured to acquire an ambient temperature and a rotation speed of an outdoor unit of an air conditioner;
a determination module configured to determine whether the ambient temperature and the rotation speed of the outdoor unit meet a defrosting condition; and
a control module configured to start a defrosting operation of the air conditioner if the defrosting condition is met.

In some embodiments, the outdoor unit of the air conditioner includes the apparatus for defrosting as described above.

The method and the apparatus for defrosting, and the outdoor unit of the air conditioner provided by the embodiments of the present disclosure are advantageous in that:
when the ambient temperature is lower than the temperature threshold value, the outdoor unit of the air conditioner faces the possibility of frosting; if the outdoor unit of the air conditioner frosts, the static pressure inside a condenser is increased, and a fan of the outdoor unit bears an increased load, so the rotation speed of the outdoor unit is lowered, that is, a lower rotation speed of the outdoor unit is directly associated with the frosting of the outdoor unit of the air conditioner. Therefore, it is a more accurate way to determine whether the outdoor unit of the air conditioner is frosted (i.e., whether the defrosting condition is met) depending on whether the environment temperature is lower than the temperature threshold value and whether the rotation speed of the outdoor unit is lower than the rotation speed threshold value, so that the timing of starting the defrosting operation of the air conditioner can be more accurate, in avoidance of starting the defrosting operation of the air conditioner while the air conditioner is actually not frosted.

The foregoing summary and the following description are exemplary and explanatory only and are not limiting the invention.

### BRIEF DESCRIPTION OF THE DRAWINGS

One or more embodiments are exemplified in the accompanying drawings, and such examples and drawings do not define the scope of the embodiments; like reference signs denote like elements throughout the drawings, and the drawings are not to scale, where:
Fig. 1 is a schematic flow diagram of a method for defrosting provided by an embodiment of the present disclosure;
Fig. 2 is a schematic flow diagram of the method for defrosting provided by an embodiment of the present disclosure;
Fig. 3 is a schematic flow diagram of the method for defrosting provided by an embodiment of the present disclosure;
Fig. 4 is a schematic flow diagram of the method for defrosting provided by an embodiment of the present disclosure;
Fig. 5 is a schematic block diagram of an apparatus for defrosting provided by an embodiment of the present disclosure; and
Fig. 6 is a schematic block diagram of an electronic device provided by an embodiment of the present disclosure.

### Reference signs:

51: acquisition module; 52: determination module; 53: control module; 61: processor; 62: memory; 63: communication interface; 64: bus.

### DETAILED DESCRIPTION

A detailed description of the implementation of the embodiments of the disclosure will be provided with reference to the accompanying drawings to facilitate a fuller and clearer understanding of features and technical aspects of the embodiments of the disclosure, and the drawings are included by way of illustration only and are not intended to limit the embodiments of the disclosure. In the following technical description, for an illustrative purpose, a plenty of details are set forth to provide a thorough understanding of the disclosed embodiments. However, one or more embodiments may be practiced without these such details. In other instances, well-known structures and devices may be simplified for the brevity of the drawings. An embodiment of the present disclosure provides a method for defrosting.

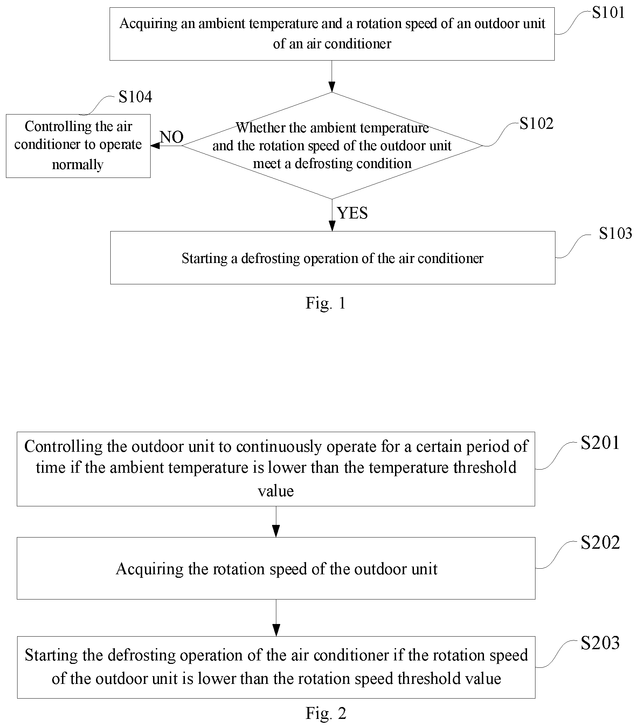

As shown in Fig. 1, in some embodiments, the method for defrosting includes the following steps.

Step S101, an ambient temperature and a rotation speed of an outdoor unit of an air conditioner are acquired.

Optionally, acquiring the ambient temperature includes: acquiring the ambient temperature through a temperature sensor provided on the outdoor unit of the air conditioner; or acquiring the ambient temperature through a wired network or a wireless network, for example, acquiring the ambient temperature in a wired or wireless manner from the Internet, or acquiring the ambient temperature in a wired or wireless manner from a server in a local area network; where the wireless network may also include any one of a Bluetooth network, a WiFi (Wireless Fidelity) network, and a ZigBee network.

Optionally, the ambient temperature includes any one of an ambient temperature nearby the outdoor unit of the air conditioner and a temperature at a return air inlet of the outdoor unit of the air conditioner.

Optionally, acquiring the rotation speed of the outdoor unit includes: acquiring the rotation speed of the outdoor unit by providing a rotation speed sensor on the outdoor unit, or acquiring the rotation speed of the outdoor unit by reading a given value of the rotation speed of the outdoor unit.

Optionally, acquiring the ambient temperature and the rotation speed of the outdoor unit of the air conditioner includes: acquiring the ambient temperature; controlling the outdoor unit to continuously operate for a certain period of time if the ambient temperature is lower than a temperature threshold value; and acquiring the rotation speed of the outdoor unit.

Step S102, whether the ambient temperature and the rotation speed of the outdoor unit meet a defrosting condition is subjected to determination.

Optionally, the defrosting condition stipulates that the ambient temperature is lower than the temperature threshold and the rotation speed of the outdoor unit is lower than a rotation speed threshold value.

The temperature threshold value refers to a temperature at which the outdoor unit of the air conditioner may frost, that is, if the ambient temperature is lower than the temperature threshold value, the outdoor unit of the air conditioner may frost. For example, the temperature threshold value is less than or equal to a critical value of an ambient temperature that may cause the outdoor unit of the air conditioner to frost.

The rotation speed threshold value refers to a rotation speed that the outdoor unit of the air conditioner can reach after the rotation speed of the outdoor unit is reduced due to the frosting. Under a normal control of the outdoor unit of the air conditioner, if the rotation speed of the outdoor unit is lower than the rotation speed threshold value, then environmental factors influencing the rotation speed of the outdoor unit exist, and if the ambient temperature is lower than the temperature threshold value at this time, then the outdoor unit of the air conditioner faces a great possibility of frosting.

Step S103, a defrosting operation of the air conditioner is started if the defrosting condition is met.

If the defrosting condition is met, then the current ambient temperature is lower than the temperature threshold value, and the current rotation speed of the outdoor unit is lower than the rotation speed threshold value. When the ambient temperature is lower than the temperature threshold value, the outdoor unit of the air conditioner faces the possibility of frosting; if the outdoor unit of the air conditioner frosts, the static pressure inside a condenser is increased, and a fan of the outdoor unit bears an increased load, so the rotation speed of the outdoor unit is lowered, that is, a lower rotation speed of the outdoor unit is directly associated with the frosting of the outdoor unit of the air conditioner. Therefore, it is a more accurate way to determine whether the outdoor unit of the air conditioner is frosted (i.e., whether the defrosting condition is met) depending on whether the environment temperature is lower than the temperature threshold value and whether the rotation speed of the outdoor unit is lower than the rotation speed threshold value, so that the timing of starting the defrosting operation of the air conditioner can be more accurate, in avoidance of starting the defrosting operation of the air conditioner while the air conditioner is actually not frosted.

Step S104, when the defrosting condition is not met, the air conditioner is controlled to operate normally.

In step S103, there are various ways for starting the defrosting operation of the air conditioner when the defrosting condition is met.

As shown in Fig. 2, in some embodiments, the step S103 of starting the defrosting operation of the air conditioner when the defrosting condition is met includes specifically:
step S201, controlling the outdoor unit to continuously operate for a certain period of time if the ambient temperature is lower than the temperature threshold value;
step S202, acquiring the rotation speed of the outdoor unit; and
step S203, starting the defrosting operation of the air conditioner if the rotation speed of the outdoor unit is lower than the rotation speed threshold value.

When the ambient temperature is lower than the temperature threshold value, the outdoor unit of the air conditioner faces the possibility of frosting; the frosting is a slow process, and if the ambient temperature lower than the temperature threshold value lasts for only a while, then the outdoor unit of the air conditioner may not frost yet or only frost slightly; in the case that the outdoor unit is controlled to have continuously operated for a specific period of time, if the outdoor unit of the air conditioner is found to have frosted, then the outdoor unit may have frosted substantially, which has a great influence on the rotation speed of the outdoor unit, and this is the best time to acquire an accurate rotation speed of the outdoor unit. For example, if the rotation speed of the outdoor unit is lower than the rotation speed threshold value, then the outdoor unit of the air conditioner faces a greater possibility of frosting, so that an accurate determination can be made on whether the outdoor unit of the air conditioner is frosted, which is followed by the defrosting operation of the air conditioner to effectively defrost.

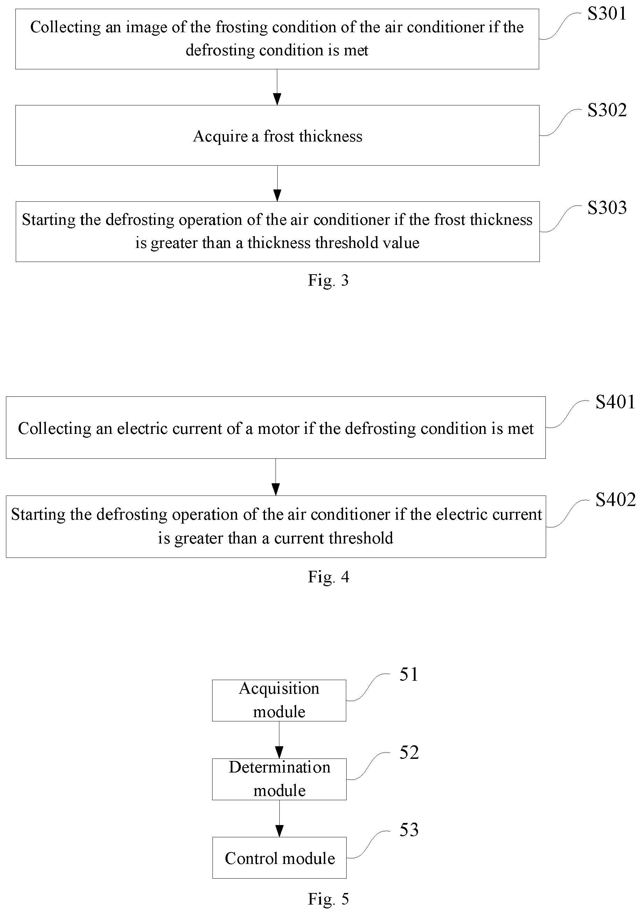

As shown in Fig. 3, in some embodiments, the step S103 of starting the defrosting operation of the air conditioner if the defrosting condition is met includes specifically:
step S301, collecting an image of a frosting status of the air conditioner if the defrosting condition is met,
where, optionally, the image of the frosting status of the air conditioner can be collected by a camera provided on the outdoor unit of the air conditioner;
step S302, acquiring a frost thickness,
where, optionally, acquiring a frost thickness includes acquiring an average gray scale of the collected image, and retrieving a frosting thickness corresponding to the average gray scale in a database, a smaller the gray scale corresponding to a greater frost thickness; and
step S303, starting the defrosting operation of the air conditioner if the frost thickness is greater than a thickness threshold value.

In the embodiment, not only whether the ambient temperature and the rotation speed of the outdoor unit meet the defrosting condition is considered, but also the frost thickness is collected through an image. The defrosting operation of the air conditioner is not started until the frost thickness is determined to be greater than the thickness threshold value. In this way, the frequency of the air conditioner to enable the defrosting operation can be further reduced, which is advantageous for improving the energy efficiency of the air conditioner and keep the indoor ambient temperature at a stable level.

As shown in Fig. 4, in some embodiments, the step S103 of starting the defrosting operation of the air conditioner if the defrosting condition is met includes specifically:
step S401, collecting an electric current of a motor if the defrosting condition is met,
where, optionally, the electric current of the motor is collected by a current sensor; and
step S402, starting the defrosting operation of the air conditioner if the electric current is greater than a current threshold.

Herein, the motor is easy to burn out if the electric current is greater than the current threshold value.

In the embodiment, not only whether the ambient temperature and the rotation speed of the outdoor unit meet the defrosting condition is considered, but also the electric current of the motor is collected. After the condenser of the outdoor unit of the air conditioner is frosted over, the static pressure inside the condenser is increased, the motor bears an increased load, and the electric current of the motor increases. Once the electric current of the motor increases to a certain degree, the fan is controlled to operate at a reduced rotation speed for avoiding burning the motor due to a continuous increase of the electric current of the motor. That is, the reduction of the rotation speed of the outdoor unit is caused by suppressing the increasing current to protect the motor, and a more accurate determination of whether the outdoor unit is frosted is possible by detecting the electric current of the outdoor unit.

In some embodiments, the step S103 of starting the defrosting operation of the air conditioner if the defrosting condition is met includes specifically:
controlling the outdoor unit to continuously operate for a certain period of time if the ambient temperature is lower than the temperature threshold value;
acquiring the rotation speed of the outdoor unit
collecting the image of the frosting status of the air conditioner and collecting the electric current of the motor if the rotation speed of the outdoor unit is lower than the rotation speed threshold value; and
starting the defrosting operation of the air conditioner if the frost thickness is greater than the thickness threshold value and the electric current of the motor is greater than the current threshold value.

An embodiment of the disclosure also provides an apparatus for defrosting.

As shown in Fig. 5, in some embodiments, the apparatus for defrosting includes:
an acquisition module 51 configured to acquire an ambient temperature and a rotation speed of an outdoor unit of an air conditioner;
a determination module 52 configured to determine whether the ambient temperature and the rotation speed of the outdoor unit meet a defrosting condition; and
a control module 53 configured to start a defrosting operation of the air conditioner if the defrosting condition is met.

If the defrosting condition is met, then the current ambient temperature is lower than the temperature threshold value, and the current rotation speed of the outdoor unit is lower than the rotation speed threshold value. When the ambient temperature is lower than the temperature threshold value, the outdoor unit of the air conditioner faces the possibility of frosting; if the outdoor unit of the air conditioner frosts, the static pressure inside a condenser is increased, and a fan of the outdoor unit bears an increased load, so the rotation speed of the outdoor unit is lowered, that is, a lower rotation speed of the outdoor unit is directly associated with the frosting of the outdoor unit of the air conditioner. Therefore, it is a more accurate way to determine whether the outdoor unit of the air conditioner is frosted (i.e., whether the defrosting condition is met) depending on whether the environment temperature is lower than the temperature threshold value and whether the rotation speed of the outdoor unit is lower than the rotation speed threshold value, so that the timing of starting the defrosting operation of the air conditioner can be more accurate, in avoidance of starting the defrosting operation of the air conditioner while the air conditioner is actually not frosted.

Optionally, acquiring the ambient temperature includes: acquiring the ambient temperature through a temperature sensor provided on the outdoor unit of the air conditioner; or acquiring the ambient temperature through a wired network or a wireless network, for example, acquiring the ambient temperature in a wired or wireless manner from the Internet, or acquiring the ambient temperature in a wired or wireless manner from a server in a local area network; where the wireless network may also include any one of a Bluetooth network, a WiFi (Wireless Fidelity) network, and a ZigBee network.

Optionally, the ambient temperature includes any one of an ambient temperature nearby the outdoor unit of the air conditioner and a temperature at a return air inlet of the outdoor unit of the air conditioner.

Optionally, acquiring the rotation speed of the outdoor unit includes: acquiring the rotation speed of the outdoor unit by providing a rotation speed sensor on the outdoor unit, or acquiring the rotation speed of the outdoor unit by reading a given value of the rotation speed of the outdoor unit.

In the invention, the acquisition module 51 is configured to: acquire the ambient temperature; control the outdoor unit to continuously operate for a certain period of time if the ambient temperature is lower than a temperature threshold value; and acquire the rotation speed of the outdoor unit.

Optionally, the defrosting condition in the determination module 52 stipulates that the ambient temperature is lower than the temperature threshold and the rotation speed of the outdoor unit is lower than a rotation speed threshold value.

The temperature threshold value refers to a temperature at which the outdoor unit of the air conditioner may frost, that is, if the ambient temperature is lower than the temperature threshold value, the outdoor unit of the air conditioner may frost. For example, the temperature threshold value is less than or equal to a critical value of an ambient temperature that may cause the outdoor unit of the air conditioner to frost.

The rotation speed threshold value refers to a rotation speed that the outdoor unit of the air conditioner can reach after the rotation speed of the outdoor unit is reduced due to the frosting. Under a normal control of the outdoor unit of the air conditioner, if the rotation speed of the outdoor unit is lower than the rotation speed threshold value, then environmental factors influencing the rotation speed of the outdoor unit exist, and if the ambient temperature is lower than the temperature threshold value at this time, then the outdoor unit of the air conditioner faces a great possibility of frosting.

The control module 53 may be configured in a variety of ways.

In some embodiments, the control module 53 is further configured to:
control the outdoor unit to continuously operate for a certain period of time if the ambient temperature is lower than the temperature threshold value;
acquire the rotation speed of the outdoor unit; and
start the defrosting operation of the air conditioner if the rotation speed of the outdoor unit is lower than the rotation speed threshold value.

When the ambient temperature is lower than the temperature threshold value, the outdoor unit of the air conditioner faces the possibility of frosting; the frosting is a slow process, and if the ambient temperature lower than the temperature threshold value lasts for only a while, then the outdoor unit of the air conditioner may not frost yet or only frost slightly; in the case that the outdoor unit is controlled to have continuously operated for a specific period of time, if the outdoor unit of the air conditioner is found to have frosted, then the outdoor unit may have frosted substantially, which has a great influence on the rotation speed of the outdoor unit, and this is the best time to acquire a relatively accurate rotation speed of the outdoor unit. For example, if the rotation speed of the outdoor unit is lower than the rotation speed threshold value, then the outdoor unit of the air conditioner faces a greater possibility of frosting, so that an accurate determination can be made on whether the outdoor unit of the air conditioner is frosted, which is followed by the defrosting operation of the air conditioner to effectively defrost.

In some embodiments, the control module 53 is further configured to collect an image of a frosting status of the air conditioner if the defrosting condition is met, acquire a frost thickness, and start the defrosting operation of the air conditioner if the frost thickness is greater than a thickness threshold value.

In the embodiment, not only whether the ambient temperature and the rotation speed of the outdoor unit meet the defrosting condition is considered, but also the frost thickness is collected through an image. The defrosting operation of the air conditioner is not started until the frost thickness is determined to be greater than the thickness threshold value. In this way, the frequency of the air conditioner to enable the defrosting operation can be further reduced, which is advantageous for improving the energy efficiency of the air conditioner and keep the indoor ambient temperature at a stable level.

Optionally, acquiring a frost thickness includes acquiring an average gray scale of the collected image, and retrieving a frosting thickness corresponding to the average gray scale in a database, a smaller the gray scale corresponding to a greater frost thickness; and
In the invention, the control module 53 is further configured to collect an electric current of a motor if the defrosting condition is met, and start the defrosting operation of the air conditioner if the electric current is greater than a current threshold.

Herein, the motor is easy to burn out if the electric current is greater than the current threshold value.

After the condenser of the outdoor unit of the air conditioner is frosted over, the static pressure inside the condenser is increased, the motor bears an increased load, and the electric current of the motor increases. Once the electric current of the motor increases to a certain degree, the fan is controlled to operate at a reduced rotation speed for avoiding burning the motor due to a continuous increase of the electric current of the motor. That is, the reduction of the rotation speed of the outdoor unit is caused by suppressing the increasing current to protect the motor, and a more accurate determination of whether the outdoor unit is frosted is possible by detecting the electric current of the outdoor unit.

Optionally, the electric current of the motor is collected by a current sensor.

In some embodiments, the control module 53 is specifically configured to:
control the outdoor unit to continuously operate for a certain period of time if the ambient temperature is lower than the temperature threshold value;
acquire the rotation speed of the outdoor unit;
collect the image of the frosting status of the air conditioner and collecting the electric current of the motor if the rotation speed of the outdoor unit is lower than the rotation speed threshold value; and
start the defrosting operation of the air conditioner if the frost thickness is greater than the thickness threshold value and the electric current of the motor is greater than the current threshold value.

An embodiment of the invention further provides an outdoor unit of an air conditioner, including the apparatus for defrosting as described above.

An embodiment of the present disclosure also provides a computer-readable storage medium storing computer-executable instructions configured to perform the above-described method for defrosting.

An embodiment of the present disclosure also provide a computer program product including a computer program stored on a computer-readable storage medium, the computer program including program instructions executable by a computer to cause the computer to perform the above-described method for defrosting.

The computer-readable storage medium may be a transient computer-readable storage medium or a non-transient computer-readable storage medium.

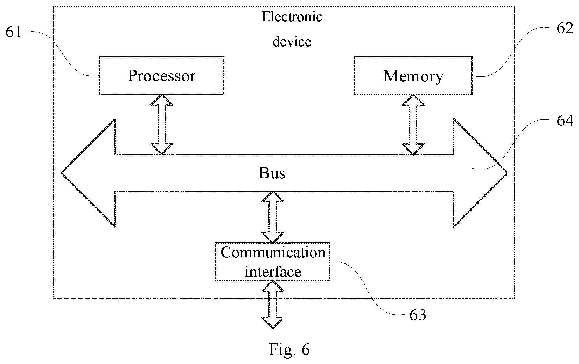

An embodiment of the present disclosure also provides an electronic device, the structure of which is shown in Fig. 6, including:
at least one processor 61 (Fig. 6 shows one processor 61 as an example); and a memory 62, as well as a communication interface 63 and a bus 64, wherein the processor 61, the communication interface 63, and the memory 62 may communicate with each other via the bus 64. The communication interface 63 may be used for information transmission. The processor 61 may invoke logic instructions in the memory 62 to perform the method for defrosting according to the embodiments described above.

Further, the aforementioned logic instructions in the memory 62 may be stored in a computer-readable storage medium when implemented in the form of software functional units and sold or used as an independent product.

The memory 62 serves as a computer-readable storage medium for storing software programs and computer-executable programs such as program instructions/modules corresponding to the method in the disclosed embodiments. The processor 61 executes functional applications and processes data by running program instructions/modules stored in the memory 62, i.e., implementing the method for defrosting described in the above embodiments.

The memory 62 may include a storage program partition and a storage data partition, wherein the storage program partition may store an operating system and an application program required for at least one function; the storage data partition may store data or the like created according to the use of the terminal device. Besides, the memory 62 may include a high speed random access memory, and may also include a non-volatile memory.

The aspects of the disclosed embodiments may be embodied in the form of a software product stored in a storage medium including one or more instructions for causing a computer device, which may be a personal computer, a server, or a network device, etc., to perform all or part of the steps of the method described in the embodiments of the present disclosure. The storage medium can be a non-transient storage medium, including a variety of media capable of storing program codes, such as a USB flash disk, a mobile hard disk drive, a read-only memory (ROM), a random access memory (RAM), or a magnetic or optical disk; alternatively, the storage medium can be transient storage media.

The foregoing description and drawings illustrate embodiments of the present disclosure sufficiently to enable those skilled in the art to practice them. Other embodiments may include structural, logical, electrical, procedural, and other variations. These embodiments merely represent possible variations. Individual components and functions are optional unless explicitly required otherwise, and the order of operation may vary. Portions and features of some embodiments may be included in other embodiments or replace those of other embodiments. The scope of the invention is defined by the claims. As used herein, although the terms "first", "second", and the like may describe various elements, these elements should not be limited by these terms. These terms are only used to distinguish one element from another. For example, a first element may be referred to as a second element without changing the meaning of the description, and likewise, a second element may be referred to as a first element, so long as all occurrences of the "first element" are consistently renamed and all occurrences of the "second element" are consistently renamed. The first element and the second element are both elements, but may not be identical elements. Also, the wording herein is used for describing the embodiments only and not intended to limit the claims. As used in the embodiments and the claims, the singular forms of "a", "an", and "the" are intended to include the plural forms as well, unless it's clearly indicated otherwise. Similarly, the term "and/or" as used herein is meant to encompass any and all possible combinations of one or more of the associated lists. Additionally, the term "comprise", as well as variations thereof, i.e., "comprises" and/or "comprising", when used herein, refers to the presence of stated features, integers, steps, operations, elements, and/or components, but do not preclude presence or addition of one or more other features, integers, steps, operations, elements, components and/or groups. An element defined by the phrase "includes a..." does not, without more constraints, preclude the existence of additional identical elements in the process, method, or device that includes the element. Herein, it is noted that each embodiment differs from another embodiment in their emphases, and they share something in common as the reference for each other. For the method, the product, and the like disclosed in the embodiments, if they correspond to the method disclosed in the embodiments, reference may be made to the corresponding description of the method.

Those skilled in the art will appreciate that the various illustrative units and algorithm steps described in connection with the embodiments disclosed herein may be implemented as electronic hardware, or combinations of computer software and electronic hardware. Whether such functionality is implemented as hardware or software depends upon the particular application and design constraints imposed on the particular implementation. Those skilled in the art may implement the described functionality in varying ways for each particular application, but such an implementation should not be interpreted as causing a departure from the scope of the disclosed embodiments. It will be apparent to those skilled in the art that, for convenience and brevity of description, reference may be made to corresponding processes in the foregoing method embodiments for specific operation of the system, apparatus and unit described above, which will not be described in detail herein.

In the embodiments disclosed herein, the disclosed method, article of manufacture (including, but not limited to, apparatus, device, etc.) may be implemented otherwise. For example, the apparatus embodiments described above are merely illustrative, e.g., the partitioning of unit may be only based on the logical function, and additional ways of partitioning may be possible in an actual implementation, doe example, multiple units or components may be combined or integrated into another system, or some features may be omitted or not performed. Besides, the couplings or direct couplings or communicative connections shown or discussed with respect to one another may be indirect couplings or communicative connections through some interface, device or unit, and may be electrical, mechanical or otherwise. The units described as separate components may or may not be physically separate, and the components shown as units may or may not be physical units, in other words, they may have a single location, or may be a plenty of units distributed over a network. Some or all of the units may be selected as necessary to implement the embodiments herein. Moreover, the functional units in the embodiments of the present disclosure may be integrated in one processing unit, may be separate physical units, or may be integrated in one unit with two or more units.

The flowcharts and block diagrams in the drawings illustrate the architecture, functionality, and operation of possible implementations of the system, method, and computer program product in accordance with embodiments of the present disclosure. **In** this regard, each block in the flowchart or block diagram may represent a module, a segment, or a portion of codes, which includes one or more executable instructions for implementing the specified logical function(s). In some alternative implementations, the functions noted in the blocks may take place in a different order from that noted in the drawings. For example, two successive blocks may in fact be executed substantially in parallel, and they may sometimes be executed in the reverse order, depending upon the functionality involved. In the description of the flowcharts and block diagrams in the drawings, the operations or steps corresponding to different blocks may also occur in a different order from that disclosed in the description, sometimes without a particular order between the different operations or steps. For example, two successive operations or steps may in fact be performed substantially in parallel, and they may sometimes be performed in the reverse order, depending on the functionality involved. Each block of the block diagrams and/or flowcharts, and combinations of blocks in the block diagrams and/or flowcharts, can be implemented by special purpose hardware-based systems which perform the specified functions or acts, or implemented by combinations of special purpose hardware and computer instructions.

## Claims

1. A method for defrosting, comprising:
acquiring an ambient temperature and a rotation speed of an outdoor unit of an air conditioner;
determining whether the ambient temperature and the rotation speed of the outdoor unit meet a defrosting condition; and
starting a defrosting operation of the air conditioner if the defrosting condition is met;
wherein the defrosting condition stipulates that the ambient temperature is lower than a temperature threshold and the rotation speed of the outdoor unit is lower than a rotation speed threshold value;
**characterized in that**
the step of starting the defrosting operation of the air conditioner when the defrosting condition is met includes specifically:
controlling the outdoor unit to continuously operate for a certain period of time if the ambient temperature is lower than the temperature threshold value;
acquiring the rotation speed of the outdoor unit;
collecting an electric current of a motor if the rotation speed of the outdoor unit is lower than the rotation speed threshold value; and
starting the defrosting operation of the air conditioner if the electric current is greater than a current threshold.

2. The method according to claim 1, **characterized in that** the step of starting the defrosting operation of the air conditioner when the defrosting condition is met includes specifically:
collecting an image of a frosting status of the air conditioner if the defrosting condition is met, wherein the image of the frosting status of the air conditioner can be collected by a camera provided on the outdoor unit of the air conditioner,
acquiring a frost thickness, and starting the defrosting operation of the air conditioner if the frost thickness is greater than a thickness threshold value.

3. An apparatus for defrosting, comprising:
an acquisition module configured to acquire an ambient temperature and a rotation speed of an outdoor unit of an air conditioner;
a determination module configured to determine whether the ambient temperature and the rotation speed of the outdoor unit meet a defrosting condition; and
a control module configured to start a defrosting operation of the air conditioner if the defrosting condition is met, wherein the defrosting condition stipulates that the ambient temperature is lower than a temperature threshold and the rotation speed of the outdoor unit is lower than a rotation speed threshold value;
**characterized in that**
the control module is further configured to:
control the outdoor unit to continuously operate for a certain period of time if the ambient temperature is lower than the temperature threshold value;
acquire the rotation speed of the outdoor unit;
collect an electric current from the motor if the rotation speed of the outdoor unit is lower than the rotation speed threshold value; and
start the defrost operation of the air if the electric current is greater than a current threshold.

4. The apparatus according to claim 3, **characterized in that** the control module is further configured to collect an image of a frosting status of the air conditioner if the defrosting condition is met, wherein the image of the frosting status of the air conditioner can be collected by a camera provided on the outdoor unit of the air conditioner,
acquire a frost thickness, and start the defrosting operation of the air conditioner if the frost thickness is greater than a thickness threshold value.

5. An outdoor unit of an air conditioner, **characterized by** comprising the apparatus according to any of claims 3 or 4.

## Patentansprüche

1. Abtauverfahren mit den Schritten:
Erfassen einer Umgebungstemperatur und einer Drehzahl einer Außeneinheit einer Klimaanlage;
Feststellen, ob die Umgebungstemperatur und die Drehzahl der Außeneinheit eine Abtaubedingung erfüllen; und
Starten eines Abtauvorgangs der Klimaanlage, wenn die Abtaubedingung erfüllt ist;
wobei die Abtaubedingung vorsieht, dass die Umgebungstemperatur niedriger als ein Temperaturschwellenwert ist und die Drehzahl der Außeneinheit niedriger als ein Drehzahlschwellenwert ist;
**dadurch gekennzeichnet, dass**
der Schritt des Startens des Abtauvorgangs der Klimaanlage, wenn die Abtaubedingung erfüllt ist, insbesondere die folgenden Schritte aufweist:
Steuern der Außeneinheit derart, dass sie über einen bestimmten Zeitraum kontinuierlich arbeitet, wenn die Umgebungstemperatur niedriger als der Temperaturschwellenwert ist;
Erfassen der Drehzahl der Außeneinheit;
Erfassen eines elektrischen Stroms eines Motors, wenn die Drehzahl der Außeneinheit niedriger als der Drehzahlschwellenwert ist; und
Starten des Abtauvorgangs der Klimaanlage, wenn der elektrische Strom einen Stromschwellenwert übersteigt.

2. Verfahren nach Anspruch 1, **dadurch gekennzeichnet, dass** der Schritt des Startens des Abtauvorgangs der Klimaanlage, wenn die Abtaubedingung erfüllt ist, insbesondere die folgenden Schritte aufweist:
Erfassen eines Bildes eines Frostzustands der Klimaanlage, wenn die Abtaubedingung erfüllt ist,
wobei das Bild des Frostzustands der Klimaanlage von einer Kamera erfasst werden kann, die an der Außeneinheit der Klimaanlage vorgesehen ist,
Erfassen einer Frostdicke, und Starten des Abtauvorgangs der Klimaanlage, wenn die Frostdicke einen Dickenschwellenwert übersteigt.

3. Abtauvorrichtung mit:
einem Erfassungsmodul, das zum Erfassen einer Umgebungstemperatur und einer Drehzahl einer Außeneinheit einer Klimaanlage ausgebildet ist;
einem Feststellungsmodul, das dazu ausgebildet ist, festzustellen, ob die Umgebungstemperatur und die Drehzahl der Außeneinheit eine Abtaubedingung erfüllen; und
einem Steuermodul, das dazu ausgebildet ist, einen Abtauvorgang der Klimaanlage zu starten, wenn die Abtaubedingung erfüllt ist, wobei die Abtaubedingung vorsieht, dass die Umgebungstemperatur niedriger als ein Temperaturschwellenwert ist und die Drehzahl der Außeneinheit niedriger als ein Drehzahlschwellenwert ist;
**dadurch gekennzeichnet, dass** das Steuermodul ferner dazu ausgebildet ist,
die Außeneinheit derart zu steuern, dass sie über einen bestimmten Zeitraum kontinuierlich arbeitet, wenn die Umgebungstemperatur niedriger als der Temperaturschwellenwert ist;
die Drehzahl der Außeneinheit zu erfassen;
einen elektrischen Strom eines Motors zu erfassen, wenn die Drehzahl der Außeneinheit niedriger als der Drehzahlschwellenwert ist; und
den Abtauvorgang der Klimaanlage zu starten, wenn der elektrische Strom einen Stromschwellenwert übersteigt.

4. Vorrichtung nach Anspruch 3, **dadurch gekennzeichnet, dass** das Steuermodul ferner dazu ausgebildet ist, ein Bild eines Frostzustands der Klimaanlage zu erfassen, wenn die Abtaubedingung erfüllt ist, wobei das Bild des Frostzustands der Klimaanlage von einer Kamera erfasst werden kann, die an der Außeneinheit der Klimaanlage vorgesehen ist,
eine Frostdicke zu erfassen, und den Abtauvorgang der Klimaanlage zu starten, wenn die Frostdicke einen Dickenschwellenwert übersteigt.

5. Außeneinheit einer Klimaanlage, **dadurch gekennzeichnet, dass** sie die Vorrichtung nach einem der Ansprüche 3 oder 4 aufweist.

## Revendications

1. Procédé de dégivrage, comprenant les étapes consistant à :
acquérir une température ambiante et une vitesse de rotation d'une unité extérieure d'un conditionneur d'air ;
déterminer si la température ambiante et la vitesse de rotation de l'unité extérieure satisfont une condition de dégivrage ; et
démarrer une opération de dégivrage du conditionneur d'air si la condition de dégivrage est satisfaite ;
dans lequel la condition de dégivrage stipule que la température ambiante est inférieure à un seuil de température et que la vitesse de rotation de l'unité extérieure est inférieure à une valeur seuil de vitesse de rotation ;
**caractérisé en ce que**
l'étape de démarrage de l'opération de dégivrage du conditionneur d'air lorsque la condition de dégivrage est satisfaite consiste particulièrement à :
commander l'unité extérieure pour qu'elle fonctionne en continu pendant une certaine période de temps si la température ambiante est inférieure à la valeur seuil de température ;
acquérir la vitesse de rotation de l'unité extérieure ;
collecter un courant électrique d'un moteur si la vitesse de rotation de l'unité extérieure est inférieure à la valeur seuil de vitesse de rotation ; et
démarrer l'opération de dégivrage du conditionneur d'air si le courant électrique est supérieur à un seuil de courant.

2. Procédé selon la revendication 1, **caractérisé en ce que** l'étape de démarrage de l'opération de dégivrage du conditionneur d'air lorsque la condition de dégivrage est satisfaite consiste particulièrement à :
collecter une image d'un état de givrage du conditionneur d'air si la condition de dégivrage est satisfaite, dans lequel l'image de l'état de givrage du conditionneur d'air peut être collectée par une caméra disposée sur l'unité extérieure du conditionneur d'air,
acquérir une épaisseur de givre, et démarrer l'opération de dégivrage du conditionneur d'air si l'épaisseur de givre est supérieure à une valeur seuil d'épaisseur.

3. Appareil de dégivrage, comprenant :
un module d'acquisition configuré pour acquérir une température ambiante et une vitesse de rotation d'une unité extérieure d'un conditionneur d'air ;
un module de détermination configuré pour déterminer si la température ambiante et la vitesse de rotation de l'unité extérieure satisfont une condition de dégivrage ; et
un module de commande configuré pour démarrer une opération de dégivrage du conditionneur d'air si la condition de dégivrage est satisfaite, dans lequel la condition de dégivrage stipule que la température ambiante est inférieure à un seuil de température et que la vitesse de rotation de l'unité extérieure est inférieure à une valeur seuil de vitesse de rotation ;
**caractérisé en ce que**
le module de commande est en outre configuré pour :
commander l'unité extérieure pour qu'elle fonctionne en continu pendant une certaine période de temps si la température ambiante est inférieure à la valeur seuil de température ;
acquérir la vitesse de rotation de l'unité extérieure ;
collecter un courant électrique à partir du moteur si la vitesse de rotation de l'unité extérieure est inférieure à la valeur seuil de vitesse de rotation ; et
démarrer l'opération de dégivrage du conditionneur d'air si le courant électrique est supérieur à un seuil de courant.

4. Appareil selon la revendication 3, **caractérisé en ce que** le module de commande est en outre configuré pour collecter une image d'un état de givrage du conditionneur d'air si la condition de dégivrage est satisfaite, dans lequel l'image de l'état de givrage du conditionneur d'air peut être collectée par une caméra disposée sur l'unité extérieure du conditionneur d'air,
pour acquérir une épaisseur de givre, et pour démarrer l'opération de dégivrage du conditionneur d'air si l'épaisseur de givre est supérieure à une valeur seuil d'épaisseur.

5. Unité extérieure d'un conditionneur d'air, **caractérisée en ce qu'**elle comprend l'appareil selon l'une ou l'autre des revendications 3 et 4.
